# EUROPÄISCHE PATENTSCHRIFT

(11) **EP 3 715 624 B1**
(45) Veröffentlichungstag und Bekanntmachung des Hinweises auf die Patenterteilung: **09.11.2022**
(21) Anmeldenummer: 19165509.1
(22) Anmeldetag: 27.03.2019
(51) Int. Cl.: F03D 7/02

(54) **VERFAHREN ZUM BETREIBEN EINER WINDENERGIEANLAGE**
METHOD FOR OPERATING A WIND TURBINE
PROCÉDÉ DE FONCTIONNEMENT D'UNE ÉOLIENNE

(43) Veröffentlichungstag der Anmeldung: 30.09.2020
(73) Patentinhaber: Nordex Energy SE & Co. KG, 22419 Hamburg (DE)
(72) Erfinder: Lampe, Frank, 18311 Ribnitz-Damgarten (DE)
(74) Vertreter: Hauck Patentanwaltspartnerschaft mbB

(56) Entgegenhaltungen:
- EP-A1- 2 495 435
- DE-A1-102016 002 006
- US-A1- 2009 232 652

## Beschreibung

Die vorliegende Erfindung betrifft ein Verfahren zum Betrieb einer Windenergieanlage. Die Windenergieanlage besitzt ein Tragwerk und ein um eine Achse drehbar an dem Tragwerk gelagertes Bauteil. Zwischen Bauteil und Tragwerk ist eine Drehverbindung in Form eines Lagers mit einem Innen- und einem Außenring vorgesehen. Ferner sind ein Zahnelement und mindestens zwei Antriebe vorgesehen, die jeweils ein in das Zahnelement eingreifendes Ritzel aufweisen. Ein solches Tragwerk und ein entsprechendes Bauteil können beispielsweise der Mast oder der Turm der Windenergieanlage und das auf diesem drehbar angeordnete Maschinenhaus sein. In diesem Fall betreffen die Drehverbindung und die mindestens zwei Antriebe die Azimut-Drehverbindung und die Azimut-Antriebe. Ebenso kann mit Tragwerk die Rotornabe bezeichnet werden, an der ein um seine Längsachse drehbares Rotorblatt drehbar gelagert ist. Dann handelt es sich um eine Pitch-Drehverbindung und Pitch-Antriebe, durch die der Blatteinstellwinkel des Rotorblatts eingestellt wird.

Es ist bekannt, bei Windenergieanlagen ganz oder teilweise auf den Einsatz von Bremsen für verdrehbare Bauteile zu verzichten. So kann beispielsweise für die Azimut-Drehverbindung, mit dem das Maschinenhaus und damit der Rotor im Wind ausgerichtet werden, auf eine Bremse verzichtet werden, wenn die Azimut-Antriebe gegensinnig angesteuert werden und auf diese Weise dann ein Verspannen der Azimut-Drehverbindung erfolgt. Durch die gegensinnige Ansteuerung der Azimut-Antriebe werden in entgegengesetzte Richtung wirkende Drehmomente erzeugt und führen so zu einem Bremsmoment an der Azimut-Drehverbindung. Ebenso kann bei der Verstellung des Rotorblatts um seine Längsachse (Pitchverstellung) im Falle von zwei oder mehr Pitch-Antrieben eine gegensinnige Ansteuerung erfolgen, mit der das Rotorblatt in seiner Position relativ zur Rotornabe und zur Pitch-Drehverbindung mit dem Bremsmoment festgestellt wird.

Für das Verspannen eines Bauteils in seiner Position relativ zu dem Tragwerk sind grundsätzlich viele verschiedene Varianten möglich. Die gegensinnig eingebrachten Drehmomente der Antriebe können vom Betrag her unterschiedliche Größen besitzen und unterschiedlich zwischen den entsprechenden Antrieben aufgeteilt sein.

Aus DE 10 2016 002 006 A1 ist eine Verstelleinheit für eine Windenergieanlage bekannt. Die Verstelleinheit besitzt mehrere Stellantriebe, die gruppenweise gegeneinander verspannt werden können.

Aus US 2009/0232652 A1 ist eine Verspanneinrichtung für einen Azimutantrieb bekannt geworden, bei der einer der Azimutantriebe mit einer höheren Drehzahl als der andere angesteuert wird. Es ist ferner vorgesehen, die Rolle der Antriebe mit der höheren Drehzahl periodisch zu tauschen.

Aus EP 2 495 435 A1 ist eine Verstelleinrichtung für den Pitch eines Rotorblatts bekannt geworden, bei dem während eines Verspannungszustandes die Pitchantriebe ihre Orientierung tauschen.

Der Erfindung liegt die Aufgabe zugrunde, ein Verspannen zwischen Bauteil und Tragwerk weiter zu verbessern, so dass insbesondere auch Beschädigungen vermieden werden.

Erfindungsgemäß wird die Aufgabe durch ein Verfahren zum Betreiben einer Windenergieanlage nach Anspruch 1 gelöst. Die Windenergieanlage weist ein Tragwerk und ein um eine Achse drehbar an dem Tragwerk gelagertes Bauteil auf. Ferner ist eine Drehverbindung zwischen dem Bauteil und dem Tragwerk als ein Lager mit einem Innenring und einem Außenring ausgebildet. Zudem sind ein Zahnelement und mindestens zwei Antriebe mit jeweils einem in das Zahnelement eingreifenden Ritzel vorgesehen, um das Bauteil relativ zu dem Tragwerk über das Zahnelement um die Achse zu drehen. Werden mindestens zwei Antriebe gegensinnig angesteuert, so wirken einander entgegengesetzte Drehmomente auf die Drehverbindung. Durch ein entsprechendes Ansteuern der Antriebe und die somit erzeugten gegensinnige Drehmomente, wird ein Verspannen der Drehverbindung erzielt. Das Verspannen entspricht in seiner Wirkung einem Bremsen der einander entgegengesetzt wirkenden Antriebe. Erfindungsgemäß ist vorgesehen, das Bauteil in einer ersten Ausrichtung an dem Tragwerk durch ein gegensinniges Ansteuern der mindestens zwei Antriebe zu verspannen. Für das gegensinnige Ansteuern der mindestens zwei Antriebe wird eine erste Orientierung der Antriebe bereitgestellt. Erfindungsgemäß ist mindestens eine Umschaltbedingung vorgesehen. Bei Eintritt der mindestens einen Umschaltbedingung wird entweder die anliegende Verspannung gelöst und eine entgegengesetzt wirkende Verspannung angelegt oder es wird bei Eintritt der mindestens einen Umschaltbedingung die anliegende Verspannung beibehalten und die entgegengesetzt wirkende Verspannung für einen späteren Verspannvorgang des Bauteils als anzulegende Verspannung bereitgestellt. Bei der entgegengesetzt wirkenden Verspannung besitzt mindestens einer der Antriebe einen gegensinnigen Drehsinn. Das erfindungsgemäße Verfahren beruht auf der Erkenntnis, dass sogenannte Pitting-Effekte beim Verspannen an der Drehverbindung auftreten können. Pitting-Effekte treten bedingt durch die gegeneinander verspannten Ritzel als Abdrücke und Vertiefungen in den Zähnen und/oder dem Zahnelement der Drehverbindung auf. Durch ein wiederholtes Verspannen in der gleichen Position, werden diese zunehmend vertieft. Ferner beruht das erfindungsgemäße Verfahren auf der Einsicht, dass es mit der Orientierung der Antriebe bei der Verspannung für ein und dieselbe Position mehrere Möglichkeiten für ein gegensinniges Ansteuern gibt, wodurch unterschiedliche Möglichkeiten für das Verspannen möglich sind. Erfindungsgemäß ist als Umschaltbedingung vorgesehen, dass in der aktuellen Ausrichtung des Bauteils an dem Tragwerk bereits zuvor die anzulegende Verspannung angelegt worden ist. Bei dieser Umschaltbedingung wird für jede Ausrichtung des Bauteils protokolliert, ob bereits zuvor eine Verspannung mit einer gleichen Orientierung angelegen hat. Bei dem erfindungsgemäßen Verfahren wird mindestens eine Umschaltbedingung definiert. Sind eine oder mehrere der Umschaltbedingungen eingetreten, so wird entweder die Verspannung gelöst und eine Verspannung mit gegensinniger Ansteuerung der mindestens zwei Antriebe vorgenommen. Alternativ ist es auch möglich, bei Eintritt der Umschaltbedingung die anliegende Verspannung beizubehalten und die entgegengesetzte Verspannung für einen späteren Verspannvorgang des Bauteils als anzulegende Verspannung bereit zu stellen. Beiden Ansätzen liegt der Gedanke zugrunde, dass die Verspannung von Bauteil und Tragwerk relativ zueinander variiert wird, um das Zahnelement und möglicherweise die Ritzel der Antriebe nicht übermäßig stark punktuell zu beanspruchen.

In einer bevorzugten Weiterbildung ist als Umschaltbedingung eine Umschalt-Zeitspanne vorgesehen und die Umschaltbedingung tritt ein, wenn die Umschalt-Zeitspanne seit Anlegen der Verspannung verstrichen ist. Es wird also, in dem Zeitpunkt, in dem die Verspannung angelegt wird, eine Zeiterfassung gestartet und gewartet, bis die Umschalt-Zeitspanne verstrichen ist. Ist die Umschalt-Zeitspanne verstrichen, so ist die Umschaltbedingung eingetreten. Die Zeiterfassung wird nach Eintritt der Umschaltbedingung zurückgesetzt.

In einer weiteren Ausgestaltung ist als Umschaltbedingung ein Umschaltwert für ein eingebrachtes Drehmoment des Antriebs oder einen Energieeintrag vorgesehen. Der Energieeintrag kann beispielsweise als Produkt aus Drehmoment und Drehzahl bestimmt werden. Die Umschaltbedingung tritt ein, wenn das in die Drehverbindung eingebrachte Drehmoment des Antriebs und/oder der Energieeintrag in die Drehverbindung den Umschaltwert übersteigt. Hierbei wird also nicht die gesamte Zeit für die Verspannung erfasst, sondern auch die Kraft, bzw. das in die Verbindung eingebrachte Drehmoment. Bevorzugt wird nach Eintritt der Umschaltbedingung der Wert für das eingebrachte Drehmoment des Antriebs und die in die Drehverbindung eingetragene Energie zurückgesetzt.

Bevorzugt ist vorgesehen, dass die Position des Bauteils an dem Tragwerk in Sektoren aufgeteilt ist und für jeden der Sektoren gespeichert wird, mit welcher Orientierung das Bauteil in diesem Sektor zuletzt verspannt wurde. So kann sichergestellt werden, dass nicht zweimal hintereinander die gleiche Verspannung im gleichen Sektor angelegt wird. Die Einteilung in Sektoren erlaubt vorteilhafter Weise auch, die Dauer der angelegten Verspannung sektorweise zu erfassen und die Umschaltbedingung erst dann eintreten zu lassen, wenn die angelegte Verspannung für eine vorbestimmte Mindestdauer in dem Sektor anliegt. Auf diese Weise wird sektorweise die Dauer für eine Verspannung in dem entsprechenden Sektor erfasst.

In einer möglichen Ausgestaltung handelt es sich bei dem Bauteil um ein Maschinenhaus und bei dem Tragwerk um einen Turm oder eine andere das Maschinenhaus tragende Konstruktion. Ebenfalls ist es möglich, dass es sich bei dem Bauteil um ein Rotorblatt handelt, das an einer Rotornabe als Tragwerk angeordnet ist. Im ersteren Fall spricht man von Azimut-Antrieben und einer Azimut-Drehverbindung, während man im letzteren Fall von Pitch-Antrieben und einer Pitch-Drehverbindung spricht.

Eine bevorzugte Ausgestaltung wird nachfolgend anhand der Figuren näher erläutert. Es zeigen:
- Fig. 1: ein Ablaufdiagramm, bei dem die Verspannung zeitabhängig getauscht wird,
- Fig. 2: ein Ablaufdiagramm, bei dem abhängig von einem Schwellwert die Verspannung getauscht wird,
- Fig. 3: ein Ablaufdiagramm, bei dem abhängig vom zuvor gewählten Verspannzustand ein Tausch der Verspannung erfolgt und
- Fig. 4: ein Ablaufdiagramm mit zwei Antrieben zur Erzeugung eines Verspannzustandes.

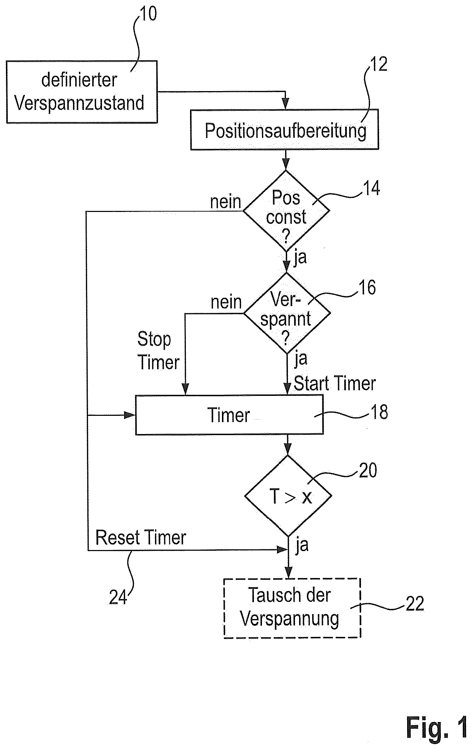

Fig. 1 zeigt ein Verfahren zum Verspannen mehrerer Antriebe an einer Drehverbindung, wie beispielsweise Azimutantriebe an einer Azimut-Drehverbindung oder Pitchantriebe an einer Pitch-Drehverbindung. Abhängig von den eingesetzten Antrieben kann durch eine gegensinnige Ansteuerung der Antriebe die entsprechende Drehverbindung festgesetzt werden. Bei einer gegensinnigen Ansteuerung ist das insgesamt aufgebrachte Drehmoment gleich null und es findet keine Drehung an der Drehverbindung statt. Gleichwohl greifen an der Drehverbindung Drehmomente an, die aber für die Links- und die Rechtsdrehung sich die Waage halten und zweckmäßigerweise liegt kein resultierendes Drehmoment vor. Sind insgesamt zwei Antriebe vorgesehen, so liegt die gegensinnige als eine Ansteuerung mit links-drehendem und mit rechts-drehendem Antrieb vor, also LR und RL. Sind mehr als zwei Antriebe vorgesehen, so können diese angetrieben werden als L-R, LR-, -LR sowie R-L, RL- und -RL. Werden bei einer Konfiguration mit insgesamt drei Antrieben alle drei Antriebe angesteuert, gibt es die Antriebskonfigurationen LRR, LLR, RLL, RRL, RLR sowie LRL. Grundsätzlich liegt ein Tausch der Verspannung bereits vor, wenn einer der Antriebe in entgegengesetzter Richtung angesteuert wird. Dies bedeutet also, dass beispielsweise bei drei Antrieben aus LRR als entgegengesetzte Ansteuerung LRL wird. Bevorzugt ist die entgegengesetzte Ansteuerung so ausgebildet, dass jeder der Antriebe genau entgegengesetzt angesteuert wird. Dies bedeutet, in dem Beispiel wird aus LRR dann RLL.

Fig. 1 geht in Schritt 10 von einem definierten Verspannzustand aus. Der definierte Verspannzustand ist gespeichert worden und bildet den Ausgangspunkt für den weiteren Ablauf. Der gespeicherte definierte Verspannzustand dient auch als definierte Ausgangslage. In Schritt 12 erfolgt eine Positionsaufbereitung, mit der eine Position des sich jeweils drehenden Drehteils erfasst wird. Bei der Verwendung des erfindungsgemäßen Verfahrens für die Azimut-Drehverbindung, wird in der Positionsaufbereitung beispielsweise die absolute Azimut-Ausrichtung des Maschinenhauses erfasst. Bei einer Verwendung für die Pitch-Drehverbindung wird mit der Positionsaufbereitung beispielsweise die Drehstellung des Rotorblatts an der Rotornabe erfasst. Die Positionsaufbereitung kann aufgenommene Messwerte zeitlich und/oder räumlich filtern und glätten.

In Schritt 14 wird in einer nachfolgenden Positionsabfrage festgestellt, ob die der erfasste Messwert für die aufbereitete Position für eine längere Zeit innerhalb eines vorbestimmten Intervalls bleibt. Wird festgestellt, dass die Position für das vorbestimmte Zeitintervall sich nicht ändert bzw. in dem vorbestimmten Intervall bleibt, so wird in einem nachfolgenden Schritt 16 geprüft, ob die Verspannung vorhanden ist. Sobald die Verspannung hergestellt ist, wird in Schritt 18 ein Timer zur Zeiterfassung gestartet.

Wird in Schritt 16 die Verspannung verlassen, so wird in Schritt 18 ebenfalls zu dem Timer gewechselt, allerdings mit der Maßgabe, dass sein Wert gestoppt wird. In Verfahrensschritt 20 wird dann überprüft, ob der Timerwert T größer als die Umschalt-Zeitspanne x ist. Ist die Umschalt-Zeitspanne x überschritten, so wird in Schritt 22 ein Tausch der Verspannung vorgenommen. Der Tausch der Verspannung bedeutet hierbei bevorzugt, dass für jeden der an der Verspannung beteiligten Antriebe die Orientierung geändert wird.

Ist die Umschalt-Zeitspanne x abgelaufen, so wird inSchritt 24 der Timer wieder zurückgesetzt.

Das in Fig. 1 gezeigte Verfahren zeigt im Wesentlichen einen von der Position abhängigen Verlauf für den Tausch der Verspannung. Der Tausch der Verspannung in Schritt 22 erfolgt hierbei bevorzugt so, dass für den nächsten Verspannzustand die vertauschte Verspannung als definierter Verspannzustand in Schritt 10 abgespeichert wird.

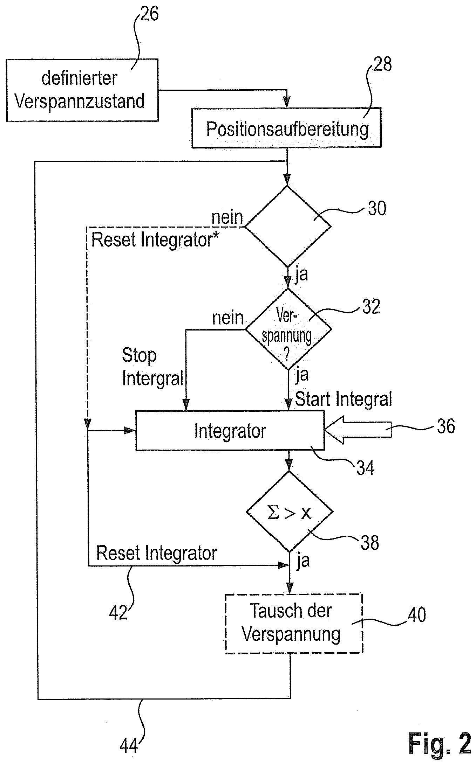

Fig. 2 zeigt eine weitere Ausgestaltung des erfindungsgemäßen Verfahrens: Auch bei dieser Ausgestaltung beginnt das Verfahren in Schritt 26 mit einem definierten Verspannzustand. In Schritt 28 erfasst eine Positionsaufbereitung erfasst die Position und überprüft in einem nachfolgenden Schritt 30 mit einer Positionsabfrage, ob die Position innerhalb eines Intervalls bleibt. Liegt die Position für eine vorbestimmte Zeit bei einem konstanten Wert oder innerhalb eines Intervalls zu dem Wert, so wird zu Schritt 32 gewechselt, in dem überprüft wird, ob eine Verspannung vorliegt. Wird die Verspannung in Schritt 32 festgestellt und liegt die Position innerhalb des Intervalls, so wird in Schritt 34 ein Integrator beim Wert null gestartet. An dem Integrator liegt ein erfasster Wert des Motormoments 36 an. Der erfasste Wert des Motormoments kann beispielsweise über die elektrischen Antriebe bestimmt werden. Anstatt des erfassten Wertes des Motormoments 36 kann auch ein Energieeintrag als Produkt aus Motormoment und Drehzahl an dem Integrator anliegen. Wird die in Schritt 32 festgestellte Verspannung gelöst, so wird der Integrator in Schritt 34 gestoppt. In Schritt 38 wird der Wert des Integrators mit einem Schwellwert x verglichen. Ergibt der Vergleich in Schritt 38, dass der Schwellwert x überschritten ist, so erfolgt ein Tausch der Verspannung in Schritt 40 40. Ebenfalls wird nach Überschreiten des Schwellwerts in Schritt 38 mit einem Reset 42 der Wert des Integrators für eine später erfolgende Integration in Schritt 34 zurückgesetzt. Über den Schritt 44 kehrt das erfindungsgemäße Verfahren nunmehr zu einer Positionsabfrage in Schritt 30 zurück.

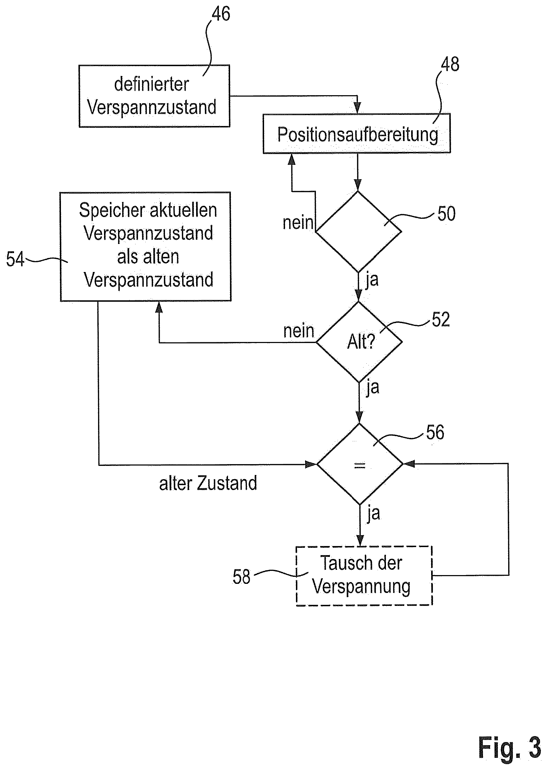

Fig. 3 zeigt ein Verfahren, bei dem die Verspannzustände alternierend gewechselt werden. Das Verfahren beginnt in Schritt 46 mit einem definierten Verspannzustand. In Schritt 48 ermittelt eine Positionsaufbereitung die aktuelle Position der Drehverbindung. In Schritt 50 wird dann überprüft, inwiefern die aufbereitete Position für eine Mindestzeitspanne konstant war oder sich innerhalb eines definierten Intervalls befunden hat. Wird keine konstante Position oder eine Position innerhalb des definierten Intervalls erkannt, so kehrt das Verfahren zur Positionsaufbereitung in Schritt 48 zurück. In einer nachfolgenden Abfrage im Schritt 52, falls eine konstante Position erkannt wurde, wird überprüft, ob für die aktuelle Position bereits einmal ein alter Verspannzustand gespeichert wurde. Ist dies nicht der Fall, so wird in Schritt 54 der anzulegende definierte Verspannzustand aus Schritt 46 als alter Verspannzustand gespeichert. Das Verfahren fährt mit der Abfrage in Schritt 56 fort, in dem der alte Verspannzustand mit dem aktuellen Verspannzustand verglichen wird. Ergibt der Vergleich, dass der anzulegende (aktuelle) Verspannzustand und der bereits einmal angelegte (alte) Verspannzustand gleich sind, so wird in Schritt 58 die Verspannung getauscht. Bei diesem Verfahren ändert sich die Verspannung erst dann, wenn die Position erneut angefahren wird und der Vergleich ergibt, dass die Verspannung identisch vorgenommen wird.

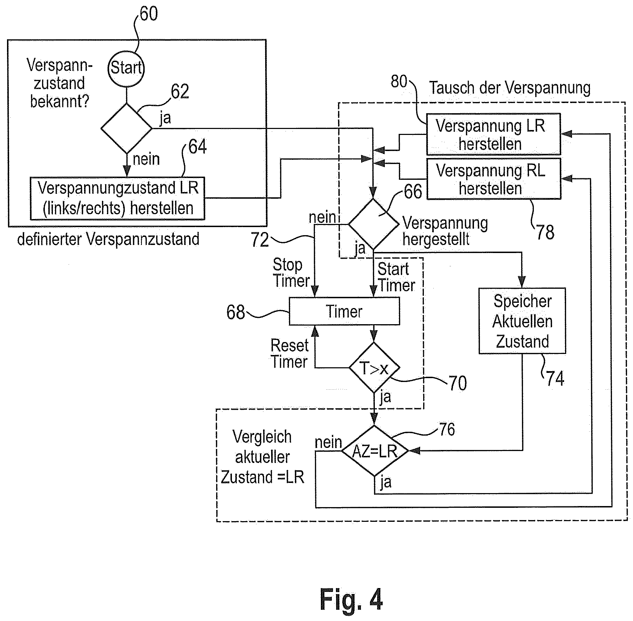

Das in Fig. 4 dargestellte Verfahren ist ebenfalls ein im Wesentlichen zeitbasiertes Verfahren, bei dem nach einem Start in Schritt 60 mit einer Abfrage Schritt 62 festgestellt wird, ob der Verspannzustand bekannt ist. Ist der Verspannzustand nicht bekannt, so wird in Schritt 64 ein links/rechts (LR) Verspannzustand hergestellt. Ist der Verspannzustand bei der Abfrage in Schritt 62 bekannt, so fährt das Verfahren fort und prüft anschließend mit einer Abfrage in Schritt 66, ob eine Verspannung hergestellt ist. Ist die Verspannung hergestellt, so wird in Schritt 68 der Timer bei einem Wert null gestartet und bei der Abfrage in Schritt 70 überprüft, ob die vorbestimmte Umschalt-Zeitspanne x für den Verspannzustand überschritten wurde. Ergibt die Abfrage in Schritt 66, dass kein Verspannzustand hergestellt wurde, so wird mit Schritt 72 der Timer in Schritt 68 gestoppt.

Wird bei der Abfrage in Schritt 66 festgestellt, dass die Verspannung hergestellt ist, so wird der aktuelle Verspannzustand in Schritt 74 gespeichert.

Nachfolgend wird in einer Abfrage in Schritt 76 abgefragt, ob der aktuelle Verspannzustand dem LR-Zustand entspricht. Ist dies der Fall, so wird über den Schritt 78 der entgegengesetzte Zustand, also eine Verspannung mit einer RL-Orientierung hergestellt. Ist bei der Abfrage in Schritt 76 der aktuelle Zustand nicht der LR-Zustand, so wird in Schritt 80 der LR-Zustand für die Verspannung hergestellt.

### Bezugszeichenliste

- 10: definierter Verspannzustand
- 12: Positionsaufbereitung
- 14: Positionsabfrage
- 16: Verspannung
- 18: Timer
- 20: Umschalt-Zeitspanne abgelaufen
- 22: Tausch der Verspannung
- 24: Reset Timer
- 26: definierter Verspannzustand
- 28: Positionsaufbereitung
- 30: Positionsabfrageschritt
- 32: Verspannung
- 34: Integrator
- 36: Drehmoment
- 38: Vergleichsschritt
- 40: Tausch der Verspannung
- 42: Reset
- 44: Rückkehrschritt
- 46: definierte Verspannung
- 48: Positionsaufbereitung
- 50: Überprüfung
- 52: Abfrage Alt?
- 54: Speichern aktueller Verspannzustand als alter Verspannzustand
- 56: Abfrage ob alt = aktuell
- 58: Tausch der Verspannung
- 60: Start
- 62: Abfrage
- 64: LR-Zustand herstellen
- 66: Verspannung hergestellt?
- 68: Timer-Start
- 70: Abfrage Umschalt-Zeitspanne
- 72: Timer-Stopp
- 74: aktueller Zustand gespeichert
- 76: Abfrage LR?
- 78: Verspannung RL herstellen
- 80: Verspannung LR herstellen

## Patentansprüche

1. Verfahren zum Betreiben einer Windenergieanlage, die ein Tragwerk und ein um eine Achse drehbar an dem Tragwerk gelagertes Bauteil aufweist, wobei eine Drehverbindung zwischen dem Bauteil und dem Tragwerk ein Lager mit einem Innen- und einem Außenring aufweist und ein Zahnelement und mindestens zwei Antriebe mit jeweils einem in das Zahnelement eingreifenden Ritzel vorgesehen sind, um das Bauteil gegenüber dem Tragwerk über das Zahnelement um die Achse zu drehen, das Verfahren umfassend:
a) Verspannen des Bauteils in einer ersten Ausrichtung an dem Tragwerk durch ein gegensinniges Ansteuern der Antriebe, wobei die erste Ausrichtung für eine anzulegende Verspannung (16, 32) bereitgestellt wird, und
b) bei Eintritt mindestens einer Umschaltbedingung entweder die anliegende Verspannung (16, 32) gelöst und eine entgegengesetzte Verspannung (16, 32) angelegt wird oder bei Eintritt der mindestens einen Umschaltbedingung die anliegende Verspannung (16, 32) beibehalten und die entgegengesetzte Verspannung (16, 32) für einen späteren Verspannvorgang des Bauteils als anzulegende Verspannung (16, 32) bereitgestellt wird, wobei als die mindestens eine Umschaltbedingung vorgesehen ist, dass in einer aktuellen Ausrichtung des Bauteils an dem Tragwerk bereits zuvor die anzulegende Verspannung (16, 32) angelegt wurde.

2. Verfahren nach Anspruch 1, **dadurch gekennzeichnet, dass** als die mindestens eine Umschaltbedingung eine Umschalt-Zeitspanne vorgesehen ist und die mindestens eine Umschaltbedingung eintritt, wenn die Umschalt-Zeitspanne (20) seit Anlegen der Verspannung (16, 32) abgelaufen ist.

3. Verfahren nach Anspruch 1 oder 2, **dadurch gekennzeichnet, dass** als die mindestens eine Umschaltbedingung ein Umschaltwert für ein eingebrachtes Drehmoment (36) oder einen Energieeintrag vorgesehen ist und die mindestens eine Umschaltbedingung eintritt, wenn das in die Drehverbindung eingebrachte Drehmoment (36) und/oder der Energieeintrag in die Drehverbindung den Umschaltwert übersteigt.

4. Verfahren nach Anspruch 3, **dadurch gekennzeichnet, dass** nach Eintritt der mindestens einen Umschaltbedingung der Wert für das eingebrachte Drehmoment (36) und/oder den Energieeintrag zurückgesetzt wird.

5. Verfahren nach Anspruch 1, **dadurch gekennzeichnet, dass** die Position des Bauteils an dem Tragwerk in Sektoren eingeteilt ist und für jeden der Sektoren gespeichert wird, mit welcher Orientierung das Bauteil in diesem Sektor zuletzt verspannt wurde.

6. Verfahren nach Anspruch 5, **dadurch gekennzeichnet, dass** die Dauer der angelegten Verspannung (16, 32) erfasst wird und eine der mindestens einen Umschaltbedingung erst eintritt, wenn die angelegte Verspannung (16, 32) für eine vorbestimmte Mindestdauer in dem Sektor anliegt.

7. Verfahren nach einem der vorangehenden Ansprüche, **dadurch gekennzeichnet, dass** als Bauteil ein Maschinenhaus und als Tragwerk ein Turm oder eine andere das Maschinenhaus tragende Konstruktion vorgesehen sind.

8. Verfahren nach einem der 2. Ansprüche 1-6, **dadurch gekennzeichnet, dass** als Bauteil ein Rotorblatt und als Tragwerk eine Rotornabe vorgesehen sind.

## Claims

1. A method for operating a wind turbine which has a supporting structure and an element which is rotatably mounted about an axis on the supporting structure, wherein a rotary connection between the element and the supporting structure has a bearing having an inner and an outer ring, and a toothed member and at least two drives, which each have a pinion engaging in the toothed member, are provided in order to rotate the element with respect to the supporting structure about the axis via the toothed member, the method comprising:
a) bracing of the element in a first alignment on the supporting structure by a reverse actuation of the drives, wherein the first alignment is supplied for a bracing (16, 32) to be applied, and;
b) when at least one switching condition occurs either the bracing (16, 32) being applied is released and an opposed bracing (16, 32) is applied, or when the at least one switching condition occurs the bracing (16, 32) being applied is retained and the opposed bracing (16, 32) is supplied for a later bracing process of the element as the bracing (16, 32) to be applied, wherein it is provided, as the at least one switching condition, that in a current alignment of the element on the supporting structure the bracing (16, 32) to be applied has already been applied previously.

2. The method according to Claim 1, **characterized in that** a switching interval is provided as the at least one switching condition and the at least one switching condition occurs when the switching interval (20) since the application of the bracing (16, 32) has ended.

3. The method according to Claim 1 or 2, **characterized in that** a switching value for an introduced torque (36) or an energy input is provided as the at least one switching condition, and the at least one switching condition occurs when the torque (36) introduced into the rotary connection and/or the energy input into the rotary connection exceeds the switching value.

4. The method according to Claim 3, **characterized in that** after the at least one switching condition occurs, the value for the introduced torque (36) and/or the energy input is reset.

5. The method according to Claim 1, **characterized in that** the position of the element on the supporting structure is divided into sectors, and the orientation with which the element was last braced in this sector is stored for each of the sectors.

6. The method according to Claim 5, **characterized in that** the duration of the applied bracing (16, 32) is captured and one of the at least one switching conditions does not occur until the applied bracing (16, 32) has been applied in the sector for a predetermined minimum duration.

7. The method according to any one of the preceding claims, **characterized in that** a nacelle is provided as the element, and a tower or another construction supporting the nacelle is provided as the supporting structure.

8. The method according to any one of Claims 1-6, **characterized in that** a rotor blade is provided as the element, and a rotor hub is provided as the supporting structure.

## Revendications

1. Procédé de fonctionnement d'une éolienne, laquelle présente une structure portante et un composant monté sur la structure portante de façon à pouvoir tourner autour d'un axe, dans lequel une liaison rotative entre le composant et la structure portante présente un roulement doté d'une bague intérieure et d'une bague extérieure et il est prévu un élément denté et au moins deux entraînements respectivement dotés d'un pignon s'engageant dans l'élément denté, pour la rotation du composant autour de l'axe par rapport à la structure portante par le biais de l'élément denté, le procédé comportant :
a) le serrage du composant dans une première orientation sur la structure portante par un actionnement en sens inverse des entraînements, la première orientation étant fournie pour un serrage (16, 32) à appliquer, et
b) lors de la survenance d'au moins une condition de commutation, soit le serrage (16, 32) appliqué est relâché et un serrage (16, 32) opposé est appliqué, soit, lors de la survenance de l'au moins une condition de commutation, le serrage (16, 32) appliqué est maintenu et le serrage (16, 32) opposé est fourni comme serrage (16, 32) à appliquer pour une opération de serrage ultérieure du composant, sachant que l'au moins une condition de commutation consiste en ce que dans une orientation actuelle du composant sur la structure portante, le serrage (16, 32) à appliquer a déjà été appliqué préalablement.

2. Procédé selon la revendication 1, **caractérisé en ce que** l'au moins une condition de commutation consiste en un laps de temps de commutation et l'au moins une condition de commutation survient lorsque le laps de temps de commutation (20) s'est écoulé depuis l'application du serrage (16, 32).

3. Procédé selon la revendication 1 ou 2, **caractérisé en ce que** l'au moins une condition de commutation consiste en une valeur de commutation pour un couple de rotation (36) introduit ou pour un apport d'énergie et l'au moins une condition de commutation survient lorsque le couple de rotation (36) introduit dans la liaison rotative et/ou l'apport d'énergie dans la liaison rotative dépasse la valeur de commutation.

4. Procédé selon la revendication 3, **caractérisé en ce qu'**après la survenance de l'au moins une condition de commutation, la valeur pour le couple de rotation (36) introduit et/ou pour l'apport énergétique est réinitialisée.

5. Procédé selon la revendication 1, **caractérisé en ce que** la position du composant sur la structure portante est divisée en secteurs et pour chacun des secteurs est enregistrée l'orientation selon laquelle le composant a dernièrement été serré dans ce secteur.

6. Procédé selon la revendication 5, **caractérisé en ce que** la durée du serrage (16, 32) appliqué est détectée et l'une des au moins une conditions de commutation ne survient que lorsque le serrage (16, 32) appliqué est appliqué pour une durée minimale prédéterminée dans le secteur.

7. Procédé selon l'une des revendications précédentes, **caractérisé en ce qu'**en tant que composant, il est prévu un boîtier de machine et en tant que structure portante, il est prévu une tour ou une autre construction portant le boîtier de machine.

8. Procédé selon l'une des revendications 1-6, **caractérisé en ce qu'**en tant que composant, il est prévu une pale de rotor et en tant que structure portante, il est prévu un moyeu de rotor.
